(19) **Europäisches Patentamt**

**European Patent Office**

**Office européen des brevets**

(11) **EP 0 739 107 B1**

(12) **EUROPÄISCHE PATENTSCHRIFT**

(45) Veröffentlichungstag und Bekanntmachung des Hinweises auf die Patenterteilung:
**26.07.2000  Patentblatt 2000/30**

(51) Int Cl.[7]: **H04L 9/30**

(21) Anmeldenummer: **96100627.7**

(22) Anmeldetag: **18.01.1996**

(54) **Public-Key-Verfahren zur Verschlüsselung von Daten**

Public-key method for data encryption

Procédé de clé publique pour chiffrage de données

(84) Benannte Vertragsstaaten:
**AT BE DK ES FR GB GR IT LU NL PT SE**

(30) Priorität: **12.04.1995  DE 19513898**

(43) Veröffentlichungstag der Anmeldung:
**23.10.1996  Patentblatt 1996/43**

(73) Patentinhaber: **Deutsche Telekom AG**
**53113 Bonn (DE)**

(72) Erfinder: **Schwenk, Jörg, Dr.rer.nat.**
**D-64846 Gross-Zimmern (DE)**

(56) Entgegenhaltungen:
- **TECHNICAL REPORT MIT/LCS/TR-212 MASSACHUSETTS INSTITUTE OF TECHNOLOGY LABORATORY FOR COMPUTER SCIENCE, Januar 1979 CAMBRIDGE (US), Seiten 1-16, M.O.RABIN 'DIGITALIZED SIGNATURES AND PUBLIC-KEY FUNCTIONS AS INTRACTABLE AS FACTORIZATION'**
- **COMMUNICATIONS OF THE ACM, FEB. 1978, USA, Bd. 21, Nr. 2, ISSN 0001-0782, Seiten 120-126, XP 000560497 RIVEST R L ET AL 'A method for obtaining digital signatures and public-key cryptosystems'**
- **22ND ANNUAL SYMPOSIUM ON FOUNDATIONS OF COMPUTER SCIENCE, NASHVILLE, TN, USA, 28-30 OCT. 1981, 1981, NEW YORK, NY, USA, IEEE, USA, Seiten 394-398, XP 000576764 BEN-OR M 'Probabilistic algorithms in finite fields'**

EP 0 739 107 B1

**Beschreibung**

Die Erfindung bezieht sich auf ein Verfahren gemäß dem Oberbegriff des Patentanspruchs 1. Public-Key-Verschlüsselungsverfahren wurden durch die Arbeiten von Diffie und Hellmann (W. Diffie, M. E. Hellmann, "New directions in cryptography", IEEE Transactions on Information Theory, Vol. IT-22, November 1976, Seiten,644-654) sowie von Rivest, Shamir und Adleman (R. Rivest, A. Shamir und L Adleman, "A method for obtaining digital signatures and public-key cryptosystems", Communications of the ACM, Vol. 27, Nr. 2, Februar 1978, Seiten 120 - 126, das sogenannte RSA-Verfahren) eingeführt. Sie verwenden zwei Schlüssel, einen zum Ver- und einen zum Entschlüsseln. Mit dem öffentlichen Schlüssel kann jeder eine Nachricht verschlüsseln, entschlüsseln kann jedoch nur derjenige, der den geheimen Schlüssel kennt.

Die Anwendungen von Public-Key-Verfahren sind vielfältig. Die Trennung der Funktionalität in einen öffentlichen und einen privaten Schlüssel erleichtert das Schlüsselmanagement erheblich. Man kann Public-Key-Verfahren auch zum Austausch von Schlüsseln für andere Verschlüsselungsverfahren (z. B. DES) verwenden. Die oben genannten Anwendungsbeispiele sind von Beutelspacher (A. Beutelspacher, "Kryptologie", Vieweg-Verlag 1994) genauer beschrieben worden.

Mit diesen bekannten Verfahren besteht die bisher beste Möglichkeit, einen zuverlässigen Datenschutz zu erzielen; jedoch ist eine noch höhere Sicherheit anzustreben. Dies zu erreichen, ist die Aufgabe der Erfindung.

Diese Aufgabe löst das im Kennzeichen des Patentanspruch 1 beschriebene Verfahren.

Vorteilhafte Weiterbildungen des Verfahrens im Sinne noch weiterer Erhöhung der Sicherheit sind in den Kennzeichen der Unteransprüche 2 und 3 beschrieben.

Das erfindungsgemäße Verfahren beruht wie das von Rivest, Shamir und Adleman auf dem schwierigen mathematischen Problem, Zahlen, die das Produkt von zwei großen Primzahlen sind, zu faktorisieren. Der öffentliche Schlüssel ist hier eine solche Zahl, und der geheime Schlüssel besteht aus den beiden Primzahlen dieser Zahl.

Die Sicherheit des beschriebenen Verfahrens kann mathematisch genauer definiert werden als die des am weitesten verbreiteten Polic-Key-Verfahrens RSA. Bei der Verschlüsselungsoperation bietet es außerdem Geschwindigkeitsvorteile gegenüber dem allgemeinen RSA-Verfahren.

Das Verfahren und seine Weiterbildungsmöglichkeiten sind nachfolgend anhand von Ausführungsbeispielen näher erläutert.

Für die Erfindung wesentlich ist die Verwendung einer ganzen Zahl n, die das Produkt zweier großer Primzahlen p und q ist, sowie von Polynomen über dem Ring $Z_n$. Um eine Nachricht m zu verschlüsseln, wird diese in Blöcke $m_1, \ldots m_k$ zerlegt, so daß diese Blöcke als Zahlen interpretiert werden können, die kleiner als n sind.

Zur Verschlüsselung der Nachricht wird das Polynom

$$P(x)=x^k+a_{k-1}x^{k-1}+\ldots+a_1x+a_0:=(x-m_1)\cdot\ldots\cdot(x-m_k) \bmod n$$

gebildet. Die Zahlenfolge $a_{k-1},\ldots, a_1, a_0$ stellt die verschlüsselte Nachricht m dar.

Zur Entschlüsselung der Nachricht werden die Nullstellen der Polynome P (x) mod p im endlichen Körper $Z_p$ und P (x) mod q im endlichen Körper $Z_q$, z. B. mit Hilfe des probabilistischen Algorithmus berechnet, der von Ben-Or beschrieben wurde (Ben-Or, "Probalistic algorithms in finite fields", Proc. IEEE FOCS 1981, Seiten 394 - 398). Man erhält mit hoher Wahrscheinlichkeit jeweils k Lösungen, die man mit Hilfe des Chinesischen Restsatzes zu $k^2$ Lösungen der Gleichung P (x) = 0 mod n zusammensetzen kann.

Um unter diesen $k^2$ Lösungen die ursprünglichen Klartextblöcke in der korrekten Reihenfolge wiederfinden zu können, werden die Blöcke $m_i$ vor ihrer Interpretation als Zahl kleiner n vorteilhaft mit einer redundanten Zusatzinformation versehen, die dies ermöglicht.

Es läßt sich zeigen, daß die Sicherheit des erfindungsgemäßen Verfahrens äquivalent ist zur Schwierigkeit, die Zahl n zu faktorisieren. Könnte ein Angreifer eine Lösung der Gleichung P(x)=0 mod n finden, so könnte er mit einer probabilistischen Methode auch die Zahl n faktorisieren. Damit das Verfahren sicher ist, sollten die auftretenden Zahlen mindestens die folgenden Bedingungen erfüllen:

- $k \geq 2$
- $\log_2 n \approx 500$.

Um das Beispiel übersichtlich zu halten, sind die Parameter sehr klein gewählt. Sei p=1237 und q=5683, also n=7029871. Um die Nachricht m=123456789101112 zu verschlüsseln, teilt man sie in drei Blöcke $m_1$=12345, $m_2$=67891 und $m_3$=01112 auf. Die Blöcke werden nun mit einer Zusatzinformation versehen, die in diesem Beispiel einfach darin besteht, an den Anfang vom $m_i$ die Ziffern ii anzufügen:

$m_1'=1112345$, $m_2'=2267891$ und $m_3'=3301112$.

Dann bilden wir:

$$P(x) = x^3 + 348523x^2 + 3270693x + 5041428$$

und die verschlüsselte Nachricht lautet:

(348523, 3270693, 5041428).

Zur Entschlüsselung bilden wir die beiden Polynome:

$$P(x) \bmod p = x^3+926x^2+65x+653=(x-796)(x-470)(x-282) \bmod p$$

und

$$P(x) \bmod q = x^3+1860x^2+2968x+607=(x-4972)(x-4160)(x-374) \bmod q.$$

Aus dem erweiterten Euklidischen Algorithmus ergibt sich die Darstellung:

$$-2683 \cdot p + 584 \cdot q = 1.$$

Mit Hilfe dieser Darstellung kann man die folgende Tabelle konstruieren, indem man für jede Nullstelle $z_p$ von $P(x) \bmod$ p und $z_q$ von $P(x) \bmod$ q die Zahlen:

$$-2683 \cdot p \cdot z_q + 584 \cdot z_p \bmod n$$

berechnet.

| mod q \ mod p | 796 | 470 | 282 |
|---------------|---------|---------|---------|
| 4972 | 3301112 | 3948974 | 5659557 |
| 4160 | 5783771 | 6431633 | 1112345 |
| 374 | 1620029 | 2267891 | 3978474 |

Aufgrund ihrer besonderen Struktur kann, man die Datenblöcke $m_1'$ = 1112345, $m_2'$ = 2267891 und $m_3'$ = 3301112 leicht von den anderen Nullstellen unterscheiden und so die Nachricht m nach Entfernen der Zusatzinformation zurückgewinnen.

**Patentansprüche**

1. Verfahren zur Verschlüsselung von Daten, basierend auf der Schwierigkeit der Faktorisierung großer natürlicher Zahlen, bei dem mit jedem Benutzer genau zwei Schlüssel assoziiert sind, ein öffentlich bekannter Schlüssel zum Verschlüsseln der Daten und ein geheimer, nur dem jeweiligen Benutzer bekannter Schlüssel zum Entschlüsseln der Daten und bei dem der Benutzer A 'der Daten so verschlüsseln möchte, daß sie nur für einen Benutzer B zugänglich sind' die Daten mit Hilfe des öffentlichen Schlüssels von Benutzer B verschlüsselt, und B die Daten mit Hilfe seines geheimen Schlüssels zurückgewinnt, **dadurch gekennzeichnet**, daß der öffentliche Schlüssel eine Zahl n ist, die das Produkt zweier großer Primzahlen p und q ist, und der geheime Schlüssel aus diesen beiden Primzahlen besteht, und daß der Datensatz m dadurch verschlüsselt wird, daß er in Blöcke $m_1,...,m_k$ zerlegt wird, die als Zahlen kleiner als n interpretiert werden, und der verschlüsselte Datensatz aus den Koeffizienten $a_{k-1},...,a_0$ des Polynoms

$$P(x)=x^k+a_{k-1}x^{k-1}+...+a_1x+a_0:=(x-m_1)\cdot...\cdot(x-m_k) \bmod n$$

besteht und die Entschlüsselung dadurch erfolgt, daß zunächst mit Hilfe des geheimen Schlüssels die Nullstellen der Polynome $P(x) \bmod p$ in $GF(p)$ und $P(x) \bmod q$ in $GF(q)$ bestimmt und diese dann mit Hilfe des Chinesischen Restsatzes zu Lösungen der Gleichung $P(x)=0 \bmod n$ zusammengesetzt werden, wobei die Blöcke $m_l, ... m_k$ des Datensatzes m in der Menge der so berechneten Lösungen der Gleichung $P(x)=O \bmod n$ enthalten sind.

2. Verfahren nach Anspruch 1, dadurch gekennzeichnet, daß zum leichteren Auffinden der Datenblöcke $m_l, ..., m_k$ in der Lösungsmenge der Gleichung $P(x)=0$ diese Datenblöcke vor ihrer Interpretation als Zahlen kleiner n mit einer Zusatzinformation versehen werden, die es ermöglicht, sie von den anderen Lösungen zu unterscheiden, und durch die ihre Reihenfolge festgelegt wird.

3. Verfahren nach Anspruch 1, dadurch gekennzeichnet, daß die verwendeten Zahlen die Bedingungen $k{\geq}2$ und $\log_2 n{\approx}500$ erfüllen.


**Claims**

1. Process for the encryption of data, based on the difficulty of factoring large natural numbers, in which precisely two keys are associated with each user, one publicly known key for encryption of the data and one secret key, known only to the respective user, for decryption of the data, and in which user A (who would like to encrypt data such that they are accessible only for a user B) encrypts the data using the public key of user B, and B recovers the data using his secret key,
   **characterized in that** the public key is a number n which is the product of two large prime numbers p and q, and the secret key consists of those two prime numbers, wherein the data record m is encrypted in that it is broken down into blocks $m_1, ..., m_k$ which are interpreted as numbers smaller than n, and the encrypted data record consists of the coefficients $a_{k-1}, ..., a_0$ of the polynomial

$$P(x)=x^k+a_{k-1}x^{k-1}+...+a_1x+a_0:=(x - m_1)\bullet...\bullet(x-m_k) \bmod n$$

   and decryption is accomplished in that, first, using the secret key, the zeros of the polynomials $P(x) \bmod p$ in $GF(p)$ and $P(x) \bmod q$ in $GF(q)$ are determined and these are then combined using the Chinese residue theorem to form solutions of the equation $P(x)=0 \bmod n$, the blocks $m_1, ..., m_k$ of the data record m being contained in the set of the thus calculated solutions of the equation $P(x)=0 \bmod n$.

2. Process according to claim 1, characterized in that,
   for easier location of the data blocks $m_1, ..., m_k$ in the solution set of equation $P(x)=0$, said data blocks are, prior to their interpretation as numbers smaller than n, provided with an additional item of information which makes it possible for them to be distinguished from the other solutions and by which their sequence is fixed.

3. Process according to claim 1, characterized in that the numbers used satisfy the conditions $k{\geq}2$ and $\log_2 n{\approx}500$.


**Revendications**

1. Procédé de codage de données, basé sur la difficulté de factoriser les grands nombres naturels, dans lequel exactement deux clés sont associées à chaque usager, une clé publiquement connue pour le codage des données et une clé secrète, uniquement connue de l'usager, pour décoder les données, l'usager A (qui désire coder des données de façon à ce qu'elles ne soient accessibles qu'à l'usager B) codant les données à l'aide de la clé publique de l'usager B, et B se faisant restituer les données à l'aide de sa clé secrète,
   **caractérisé en ce que** la clé publique est un nombre n formé par le produit de deux grands nombres premiers p et q et que la clé secrète est constituée de ces deux nombres premiers, le jeu de données m étant codé par décomposition en blocs $m_1, ..., m_k$, interprétés en tant que nombres inférieurs à n, le jeu de données codé étant formé des coefficients $a_{k-1}, ..., a_o$ du polynôme

$$P(x)=x^k+a_{k-1}x^{k-1}+...+a_1x+a_0:=(x - m_1)\cdot...\cdot(x-m_k) \text{ mod } n$$

et le décodage étant effectué en déterminant tout d'abord à l'aide de la clé secrète les zéros des polynômes $P(x)$ mod p sur GF(p) et $P(x)$ mod q sur GF(q), ceux-ci étant ensuite déclinés en solutions de l'équation $P(x)=0$ mod n à l'aide du théorème des restes chinois, les blocs $m_1,...,m_k$ du jeu de données m étant inclus dans l'ensemble des solutions ainsi calculées de l'équation $P(x)=0$ mod n.

2.  Procédé selon revendication 1, caractérisé en ce que, pour permettre de trouver plus aisément les blocs de données $m_1,...,m_k$ dans l'ensemble des solutions de l'équation $P(x)=0$, ces blocs de données sont munis, avant leur interprétation en tant que nombres inférieurs à n, d'une information supplémentaire qui permet de les distinguer des autres solutions et qui en détermine l'ordre.

3.  Procédé selon revendication 1, caractérisé en ce que les nombres utilisés remplissent les conditions $k\geq2$ et $\log_2 n\approx500$.